# EUROPÄISCHE PATENTSCHRIFT

(11) **EP 1 415 209 B1**
(45) Veröffentlichungstag und Bekanntmachung des Hinweises auf die Patenterteilung: **21.09.2005**
(21) Anmeldenummer: 02754946.8
(22) Anmeldetag: 26.07.2002
(51) Int. Cl.: G05B 19/418

(54) **PROZESSLEITSYSTEM MIT TAXIERFUNKTION**
PROCESS CONTROL SYSTEM WITH A CHARGING FUNCTION
SYSTEME DE COMMANDE DE PROCESSUS A FONCTION DE TAXATION

(30) Priorität: 07.08.2001 EP 01119041
(43) Veröffentlichungstag der Anmeldung: 06.05.2004
(73) Patentinhaber: SIEMENS AKTIENGESELLSCHAFT, 80333 München (DE)
(72) Erfinder: FISCHER, Detlef, 91325 Adelsdorf (DE); GLASER, Martin, 76698 Ubstadt-Weiher (DE); KAISER, Oliver, 76744 Wörth (DE); SAUER, Hans-Jürgen, 91074 Herzogenaurach (DE); SCHOCH, Thomas, 76275 Ettlingen (DE); SPEH, Rainer, 64331 Weiterstadt (DE); UNKELBACH, Michael, 91054 Buckenhof (DE); WAGNER, Steffen, 76297 Stutensee (DE); WALZ, Horst, 75334 Straubenhardt (DE)
(86) Internationale Anmeldenummer: PCT/EP2002/008352
(87) Internationale Veröffentlichungsnummer: WO 2003/014849

(56) Entgegenhaltungen:
- EP-A- 0 116 327
- EP-A- 1 093 038

## Beschreibung

Die Erfindung betrifft ein Prozessleitsystem.

Üblicherweise werden Prozessleitsysteme von einem Hersteller entwickelt, an einen Kunden ausgeliefert, in einer zu steuernden technischen Anlage installiert und in Betrieb genommen. Das Prozessleitsystem besteht dabei aus Hard- und Softwarekomponenten, welche jeweils mindestens eine leittechnische Funktion des Prozessleitsystems realisieren. Die Summe dieser Funktionen stellt dem Kunden eine Vielzahl von Bedien,- Beobachtungs- und Regelungsmöglichkeit für die technische Anlage zur Verfügung.

Meistens bezahlt der Kunde für die Lieferung und gegebenenfalls für die Installation des Prozessleitsystems einen Preis, beispielsweise einen vereinbarten Kaufpreis als Einmalzahlung, welcher die Benutzung des Prozessleitsystems über seine Lebensdauer mit all seinen Funktionen beinhaltet, wobei bei dem genannten Preis nicht berücksichtigt ist, in welchem Umfang er die bereitgestellten Funktionen tatsächlich nutzt und/oder wie oft und/oder für welche Zeitdauern bestimmte Funktionen genutzt werden. Des Weiteren erhält der Kunde üblicherweise als Bestandteil des Prozessleitsystems ein Projektierungssystem, mit welchem er neue leittechnische Funktionen realisieren oder mitgelieferte leittechnische Funktionen verändern kann, so dass das Prozessleitsystem im Laufe seiner Betriebsjahre jederzeit an die sich ändernden Erfordernisse der technischen Anlage anpassbar ist. Auch dieser Aspekt ist bei der Preisbildung für das Prozessleitsystem nicht berücksichtigt, der Kunde bezahlt einen - meist sehr hohen - Kaufpreis und kann die ihm gelieferten Komponenten des Prozessleitsystems praktisch nach Belieben nutzen, ohne dass sich eine Mehr- und/oder eine Mindernutzung der Funktionen des Prozessleitsystems in einer Nach- und/oder Rückzahlung zumindest eines Teils des Kaufpreises niederschlagen.

Bei einem bekannten Prozessleitsystem bezahlt der Kunde also meist zum Zeitpunkt der Lieferung einen Kaufpreis für das Prozessleitsystem, welcher einen Preisanteil jeweils für die gelieferten Hardware- und Software-Komponenten beinhaltet. So ist für den Kunden spätestens zum Zeitpunkt der Lieferung ein meist hoher finanzieller Einsatz notwendig, um ein funktionsfähiges Prozessleitsystem mit all seinen Hard- und Software-Komponenten zu erwerben.

Ein Stand der Technik bildendes Prozeßleitsystem ist aus der Druckschrift EP 1 093 038 bekannt. Aus der Druckschrift EP 0 116 327 ist eine Programmtaxiervorrichtung für Rechenanlagen bekannt, die die Nutzungsintensität einzelner Programme für abrechnungstechnische Zwecke erfassen kann.

Von daher stellt sich die Aufgabe, ein Prozessleitsystem anzugeben, welches flexibel an die Bedürfnisse eines Kunden anpassbar ist und welches insbesondere die genannten anfänglichen, hohen Investitionskosten insbesondere die Investitionskosten für die Software-Komponenten des Prozessleitsystems und die dafür aufzubringenden Lizenzzahlungen, zu reduzieren. Es ist ferner eine Aufgabe der Erfindung, ein Prozessleitsystem anzugeben, welches eine Architektur aufweist, die besonders geeignet ist, die genannten Nachteile des Standes der Technik zu überwinden.

Erfindungsgemäß wird die Aufgabe gelöst durch ein Prozessleitsystem gemäß Anspruch 1.

Die Erfindung geht dabei von der Überlegung aus, einen Vergütungswert, beispielsweise von einem Kunden zu bezahlende Lizenzgebühren, abhängig von der tatsächlichen Nutzung des Prozessleitsystems zu bestimmen. Auf diese Weise ist gewährleistet, dass der Kunde - außer einem gegebenenfalls vereinbarten festen Grundpreis, beispielsweise für die gelieferten Hardware-Komponenten des Prozessleitsystems - praktisch nur für diejenigen Funktionen des Prozessleitsystems (extra) bezahlen muss, die er wirklich nutzt. Wenn ein Kunde auf Funktionen des Prozessleitsystems zugreift laufen im Prozessleitsystem entsprechende, durch den Zugriff ausgelöste Operationen ab, welche abhängig sind von der Art der Funktion, auf welche zugegriffen wird.

So kann z.B. die Art der Operation, beispielsweise der Aufruf eines graphischen Prozessbildes mit eingeblendeten aktuellen Prozessmessdaten oder die Ausführung einer Regelungsfunktion für ein Aggregat der technischen Anlage, einen Einfluss auf die Ermittlung des Vergütungswerts haben. Ebenfalls kann die Häufigkeit, mit welcher beispielsweise die genannten Funktionen bedient werden, einen Einfluss auf die Ermittlung des Vergütungswerts haben. Es ist z.B. denkbar, dass jeder Zugriff auf eine bestimmte Funktion einen festen Vergütungswertanteil zum Vergütungswert liefert.

Die Erstellung und/oder Entfernung einer leittechnischen Funktion kann z.B. durch den Kunden durchgeführt werden, wenn er das Prozessleitsystem projektiert und z.B. mittels eines Projektierungsprogramms eine neue leittechnische Funktion erstellt, welche auf dem Prozessleitsystem ablaufen soll. Ferner kann der Kunde eine neue leittechnische Funktion auch dadurch erzeugen, dass er aus einem Vorrat von vorgefertigten leittechnischen Funktionen eine oder mehrere auswählt und mittels des Projektierungsprogramms zu der neuen leittechnischen Funktion verbindet. Der Vorrat an vorgefertigten leittechnischen Funktionen kann beispielsweise auf einem Rechner des Herstellers des Prozessleitsystems bereitgehalten werden, welcher mittels eines Web-Servers mit dem Internet verbunden ist, so dass der Kunde derartige, vorgefertigte leittechnische Funktionen über das Internet herunterladen und für ein Prozessleitsystem nutzen kann. Derartige Operationen im Prozessleitsystem des Kunden können ebenfalls einen Einfluss auf die Ermittlung des Vergütungswerts haben.

Eine Bedienhandlung kann z.B. das Aufrufen eines bestimmten Prozessbildes im Prozessleitsystem oder die Bedienung eines Aggregats der technischen Anlage mittels des Prozessleitsystems oder das Anfordern von Fehlerprotokollen, Zustandsberichten, Meldelisten usw. mittels des Prozessleitsystems umfassen. Bedienhandlungen können ferner Zugriffe des Kunden auf das Prozessleitsystem über das Internet sein, insofern das Prozessleitsystem ertüchtigt ist, über das Internet bedient zu werden. Außerdem können Bedienhandlungen auch Ausführungen von Steueralgorithmen sein, welche beispielsweise in einer speicherprogrammierbaren Steuerung (SPS) des Prozessleitsystems ausgeführt werden, um z.B. die Drehzahl eines Motors der technischen Anlage während des Betriebs konstant zu halten, auch wenn sich die Betriebsbedingungen, wie z.B. die vom Motor zu bewältigende Last, verändern.

Vorteilhaft umfasst das Prozessleitsystem einen Prozessleitrechner, einen Client-Rechner und das Internet, und mindestens ein Teil der im Prozessleitsystem ablaufenden Operationen laufen auf dem Prozessleitrechner ab.

Das Prozessleitsystem kann ferner ein oder mehrere Feldgeräte umfassen, welche vorteilhaft in der technischen Anlage installiert und zur Automatisierung von Anlagenkomponenten verwendet sind.

In dieser Ausführungsform der Erfindung ist das Prozessleitsystem ertüchtigt, mittels des Internets bedient zu werden, wobei der Prozessleitrechner zumindest einen Teil der Funktionen des Prozessleitsystems aufweist, welche als entsprechende Operationen auf dem Prozessleitrechner ablaufen.

Falls das Prozessleitsystem ein oder mehrere Feldgeräte umfasst, so können diese auch einen Teil der Funktionen des Prozessleitsystems aufweisen, welche als entsprechend Operationen auf dem oder den Feldgeräten ablaufen.

Der Client-Rechner kann beispielsweise an einem nahezu beliebigen Ort mit Internetzugang installiert sein, beispielsweise in einer zentralen Warte, welche unter Umständen sehr weit von der zu steuernden technischen Anlage entfernt ist. Der Client-Rechner wird mit dem Internet verbunden und kann über das Internet den Prozessleitrechner bedienen und somit Funktionen des Prozessleitsystems, insbesondere solche, welche den Betrieb der technischen Anlage betreffen, über das Internet bedienen. Beim erfindungsgemäßen Prozessleitsystem können nun auch diejenigen Bedienhandlungen des Prozessleitsystems zur Ermittlung des Vergütungswerts herangezogen werden, welche durch einen Benutzer mittels des Internets vorgenommen werden. Es ist z.B. denkbar, dass der Prozessleitrechner in einer Server-Farm eines Dienstleisters (Application-Service-Provider) installiert ist, die diesem gehört. Der Dienstleister stellt dem Benutzer die auf dem Prozessleitrechner installierten Funktionen des Prozessleitsystems über das Internet zur Verfügung. Der Vergütungswert kann nun abhängig von den auf dem Prozessleitrechner ablaufenden Operationen berechnet werden, da die Operationen durch eine Bedienhandlung des Benutzers über das Internet ausgelöst sind. Im vorgenannten Falle des Prozessleitrechners, welcher nicht in das Eigentum des Kunden übergeht, sondern beim Dienstleister verbleibt, sind die Investitionen des Kunden in sein Prozessleitsystem besonders gering, da er nur entsprechend des Vergütungswerts für die Nutzung der Funktionen, welche auf dem Prozessleitrechner installiert sind, bezahlen muss.

In einer weiteren vorteilhaften Ausgestaltung der Erfindung umfassen der Prozessleitrechner einen Web-Server und der Client-Rechner einen Internet-Browser, so dass mittels des Client-Rechners über das Internet die im Prozessleitrechner ablaufenden Operationen beeinflussbar sind, wobei die Operationen auch solche umfassen, durch welche weitere Operationen in weiteren Komponenten des Prozessleitsystems angestoßen werden.

In dieser Ausgestaltung der Erfindung werden weitverbreitete, universell einsetzbare Internet-Technologien eingesetzt, um das Prozessleitsystem internetfähig zu machen.

Der Prozessleitrechner verfügt über einen Web-Server, welcher im Prozessleitrechner verarbeitete und/oder gespeicherte Daten in das Internet übertragen kann. Der Client-Rechner kann mittels des Internet-Browsers über das Internet den Web-Server des Prozessleitrechners anwählen und mittels der bekannten Internet-Technologien (beispielsweise der URL-Adressierung oder des TCP/IP-Übertragungsprotokolls) gezielt Daten vom Prozessleitrechner abrufen und/oder Befehle an diesen übermitteln.

In dieser Ausführungsform der Erfindung umfasst das Prozessleitsystem weitere Komponenten, in welchen weitere Operationen ablaufen. Diese weiteren Komponenten können z.B. SPS sein, welche nahe einem zu steuernden Aggregat der technischen Anlage installiert sind und welche von dem Prozessleitrechner einen Befehl zur Abarbeitung eines in der SPS gespeicherten Programms erhalten. Insofern stoßen Operationen, welche im Prozessleitrechner ablaufen, weitere Operationen in einer oder mehreren weiteren Komponenten des Prozessleitrechners an, also beispielsweise die Ausführung eines Programms in einer SPS, welche beispielsweise durch eine Bedienhandlung eines Benutzers, welcher in den Client-Rechner einen Befehl eingibt, der über das Internet zum Prozessleitrechner übertragen wird und welcher den Prozessleitrechner veranlasst, die Ausführung eines Programms in der SPS anzustoßen.

In einer weiteren vorteilhaften Ausgestaltung der Erfindung umfassen die weiteren Komponenten Feldgeräte zur Überwachung und Steuerung von Komponenten einer technischen Anlage, welche mittels Funk-Kommunikation und/oder mittels einer Festverdrahtung mit dem Prozessleitrechner verbunden sind und die weiteren Operationen auch solche Operationen umfassen, welche in den Feldgeräten ausgeführt sind.

Feldgeräte bei dieser Ausführungsform umfassen mindestens Stell- und Messglieder, welche in einer technischen Anlage installiert sind und mittels welchen Stelleingriffe auf Aggregate der technischen Anlage bzw. Messwerte von Komponenten und/oder Aggregaten der technischen Anlage aufgenommen werden. Dabei sind die Befehle zur Auslösung mindestens eines Stelleingriffs mittels Funk vom Prozessleitrechner zu mindestens einem Stellglied übertragen und die von den Messgliedern aufgenommenen Messwerte sind per Funk an den Prozessleitrechner übermittelt. Wenn es sich bei den Stell- und/oder Messgliedern um Einrichtungen handelt, welche keiner Steuerung zugeordnet sind, mittels welcher, beispielsweise durch eine in der Steuerung angeordnete Funk-Schnittstellenkarte, eine Funk-Verbindung herstellbar ist, so ist mindestens eine Funk-Vorrichtung vorzusehen, an welche die Stell- und/oder Messglieder anzuschließen sind, damit die anfallenden Daten mittels Funk übertragbar sind.

Die Feldgeräte umfassen auch sogenannte "intelligente" Feldgeräte, welche über mindestens einen Mikroprozessor verfügen, so dass die weiteren Operationen, beispielsweise der Ablauf eines Steuerungsprogramms, in den Feldgeräten ausführbar sind. Bei den Feldgeräten handelt es sich in diesem Fall um mehr oder weniger leistungsfähige Rechner, welche üblicherweise leicht, beispielsweise mittels einer Funk-Schnittstellenkarte, ertüchtigt werden können, um eine Funk-Kommunikation mit dem Prozessleitrechner durchzuführen. In diesem Falle müssen an oder nahe dem Ort der technischen Anlage praktisch nur derartige intelligente Feldgeräte installiert sein, welche Stellbefehle an die Stellglieder übertragen und Messwerte von den Messgliedern einlesen. Die Ansteuerung der Feldgeräte, welche die weiteren Operationen durchführen, erfolgt mittels der Funk-Verbindung zum Prozessleitrechner. Der Prozessleitrechner kann also an einem nahezu beliebigen Ort mit Funk-Verbindung installiert sein und der Client-Rechner kann an einem nahezu beliebigen Ort mit Internet-Zugang installiert sein. Auf diese Weise ist das Prozessleitsystem hinsichtlich seiner Flexibilität in Bezug auf die Installationsorte der Komponenten des Prozessleitsystems besonders flexibel; praktisch die gesamte Funktionalität des Prozessleitsystems kann in dem Prozessleitrechner verwirklicht sein, wobei aber auch ein Teil der Funktionalität in den Feldgeräten realisiert sein kann und der Client-Rechner muss nur mittels eines (weitverbreiteten) Internet-Browsers einen Zugang zum Internet ermöglichen. Der Client-Rechner muss praktisch über keine spezielle Prozessleitsystem-Software verfügen und ist daher besonders preisgünstig.

Weiterhin bietet die Konfiguration des Prozessleitsystems nach dieser Ausführungsform den Vorteil, dass eine Diagnose und/oder eine Wartung und/oder eine Instandsetzung des Prozessleitsystems zumindest teilweise über das Internet ermöglicht ist.

Besonders vorteilhaft basiert die Kommunikation zwischen den Komponenten des Prozessleitsystems auf dem TCP/IP-Übertragungsprotokoll.

Die wichtigsten Komponenten des Prozessleitsystems sind dabei der Prozessleitrechner, der Client-Rechner und die Feldgeräte.

Die Verwendung des genannten, im Bereich des Internet weitverbreiteten Übertragungsprotokolls, macht die Entwicklung und/oder den Einsatz eines speziellen Übertragungsprotokolls und/oder den Einsatz eines besonderen Mediums zur Kommunikation, wie beispielsweise ein Bussystem bestehend aus Lichtwellenleitern, überflüssig. Des Weiteren wird durch die Verwendung des genannten Übertragungsprotokolls die Nutzung der bekannten Internet-Technologien zur Datenübertragung und Programmausführung ermöglicht.

Vorteilhaft ist der Vergütungswert eine von einem Benutzer des Prozessleitsystems an einen Application-Service-Provider zu entrichtende Service-Gebühr.

Bei dieser Ausführungsform der Erfindung stellt ein Dienstleister (Application-Service-Provider) die Funktionalität des Prozessleitsystems, bevorzugt im Prozessleitrechner, zur Verfügung und ein Benutzer, beispielsweise ein Kunde, welcher das Prozessleitsystem einsetzen will, benutzt das Prozessleitsystem, wobei der ermittelte Vergütungswert als Service-Gebühr vom Benutzer meist in Form von Geld an den Dienstleister zu entrichten ist.

Der Benutzer bezahlt im Wesentlichen also nur für diejenigen Funktionen, die er tatsächlich nutzt. Er bezahlt nur für den Zeitpunkt und/oder Zeitraum, an oder indem er die Funktionen nutzt.

Um eine derartige benutzungsabhängige, dynamische Ermittlung des Vergütungswertes zu realisieren, ist bevorzugt im Prozessleitrechner eine Lizenz-Server-Applikation vorzusehen, welche Zugriff auf Projektierungsdaten und auf aktuell anfallende Betriebsdaten und/oder gespeicherte Archiv-Daten der technischen Anlage hat.

Vorteilhaft kann der Kunde mit einem speziellen Software-Programm ausgestattet werden, das ihm einerseits gestattet, bestimmte Funktionen auszuführen, ihn andererseits aber auch verpflichtet, die entsprechend anfallenden, "dynamischen" benutzungsabhängigen Vergütungswerte zu bezahlen.

Im Folgenden werden zwei Ausführungsbeispiele der Erfindung näher dargestellt.

Es zeigen:
- FIG 1: ein erfindungsgemäßes Prozessleitsystem, und
- FIG 2: ein erfindungsgemäßes Prozessleitsystem, welches über das Internet bedienbar ist.

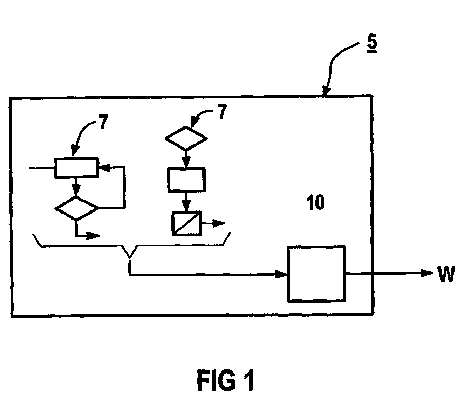

In Figur 1 ist ein Prozessleitsystem 5 dargestellt, welches eine Rechnereinheit 10 aufweist.

Die Rechnereinheit 10 ermittelt aus den im Prozessleitsystem ablaufenden Operationen 7 einen Vergütungswert W.

Die Operationen 7 können beispielsweise Operationen sein, welche ausgelöst durch eine Bedienhandlung eines Benutzers des Prozessleitsystems 5 ablaufen. Ein Beispiel dafür ist die Anwahl z.B. eines graphischen Prozessbildes der technischen Anlage, in welches aktuelle Messwerte der technischen Anlage und Bedienboxen zur Bedienung von Aggregaten der technischen Anlage eingeblendet sind. Die Betätigung der Bedienboxen, beispielsweise mittels eines Maus-Klicks durch einen Benutzer oder ein Tastendruck auf der Tastatur zur Ausführung einer Funktion, sind ebenfalls von den Operationen 7 umfasst. Des Weiteren umfassen die Operationen 7 im Prozessleitsystem ablaufende Steuerungsprogramme, beispielsweise eine oder mehrere Automatisierungsfunktionen, welche z.B. als Regelungsalgorithmus implementiert sind. Ein weiteres Beispiel für Operationen 7 sind durch einen Benutzer vorgenommene Handlungen zum projektieren des Prozessleitsystems 5, wobei z.B. Steuerungsfunktionen neu erstellt und/oder neue Steuerungsfunktionen aus vorgefertigten Basis-Funktionen, welche vorteilhaft in einem Basis-Funktions-Vorrat vorgehalten werden, zusammensetzt werden, indem z.B. Schnittstellen solcher Basis-Funktionen verbunden werden und die derart verbundenen Basis-Funktionen dadurch eine neue Funktion bilden.

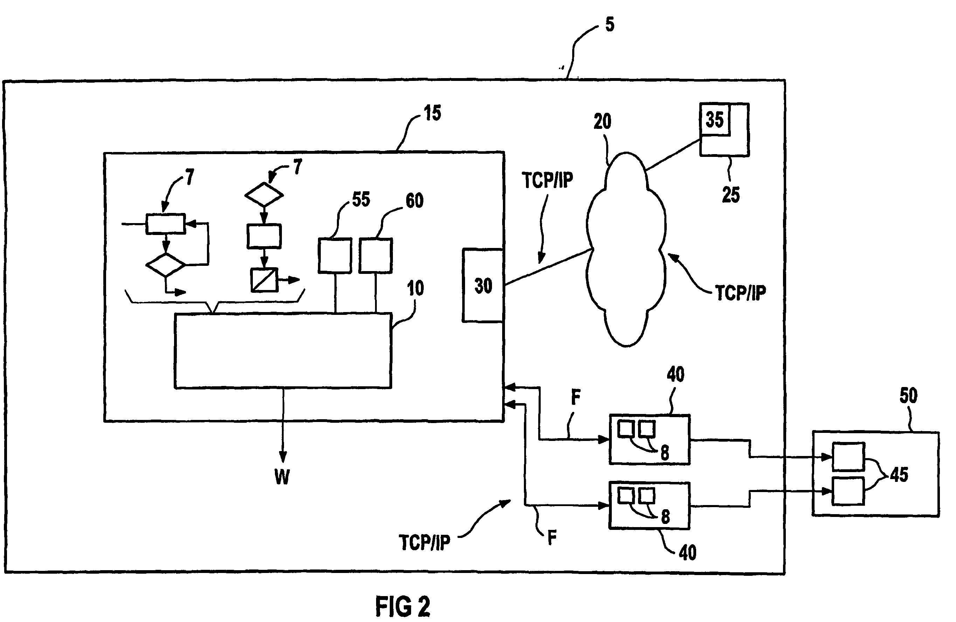

Figur 2 zeigt ein Prozessleitsystem 5, welches einen Prozessleitrechner 15, einen Client-Rechner 25 und das Internet 20 umfasst, so dass das Prozessleitsystem 5 mittels des Internets 20 bedienbar ist.

Der Prozessleitrechner umfasst einen Web-Server 30, mittels welchem insbesondere die in ihm anfallenden Daten, welche den Betrieb einer technischen Anlage 50 betreffen, über das Internet 20 übertragen werden können. Im Prozessleitrechner 15 laufen Operationen 7 ab, wie sie beispielsweise bereits im Zusammenhang mit Figur 1 dargestellt wurden.

Der Prozessleitrechner 15 umfasst weiterhin eine Recheneinheit 10, welche aus den Operationen 7 und/oder Projektierungsdaten 55 und/oder Betriebsdaten 60 einen Vergütungswert W ermittelt.

Die Projektierungsdaten 55 umfassen alle Daten, welche mit dem Aufbau des Prozessleitsystems 5 insbesondere in softwaretechnischer Hinsicht, in Verbindung stehen. Dies sind z.B. die Art und Anzahl der im Prozessleitsystem 5 realisierten Steuerungs-, Regelungs-, Bedien- und Beobachtungs- und Automatisierungsfunktionen. Aus den Projektierungsdaten 50 ist folglich ersichtlich, wie das Softwaresystem des Prozessleitsystems 5 aufgebaut ist. Die Betriebsdaten 60 umfassen zumindest aktuelle Werte von Betriebsparametern, Messwerten und Zustandsparametern, welche aktuell in der technischen Anlage 50 vorherrschen und welche an den Prozessleitrechner 15 übermittelt sind. Die Betriebsdaten 60 können außerdem auch gespeicherte Archivdaten der vorher genannten Signale umfassen, aus welchen ein vergangener Betriebszustand der technischen Anlage 50 ermittelbar ist.

Der Client-Rechner 25 umfasst einen Internet-Browser 35, mittels welchem über das Internet 20 der Web-Server 30 des Prozessleitrechners 15 anwählbar ist, so dass der Prozessleitrechner 15 des Prozessleitsystems 5 über das Internet 20 bedienbar ist. Die Kommunikation zwischen dem Client-Rechner und dem Internet 20 und zwischen dem Internet und dem Prozessleitrechner 15 basiert vorzugsweise auf dem TCP/IP-Übertragungsprotokoll, welches aus der Internet-Technolgie bekannt und dort weit verbreitet ist.

Der Prozessleitrechner 15 ist weiterhin mittels einer Funkverbindung F mit weiteren Komponenten 40 des Prozessleitsystems 5 verbunden. Diese weiteren Komponenten 40 sind beispielsweise als Feldgeräte mit einem eigenen Mikroprozessor ausgebildet, so dass weitere Operationen 8, z.B. die Ausführung eines Steuerungs-Programms oder einer sonstigen Automatisierungsfunktion, auf der weiteren Komponente 40 ermöglicht ist.

Die weiteren Komponenten 40 steuern und/oder regeln ihrerseits Komponenten 45 der technischen Anlage 50.

Die Architektur dieser Ausführungsform der Erfindung gestattet es, den Prozessleitrechner 15, mittels des Client-Rechners 25 über das Internet 20 zu bedienen und dadurch Operationen 7 im Prozessleitrechner 15 zum Ablauf zu bringen. Ein Ablauf von Operationen 7 kann einen Ablauf von weiteren Operationen 8 in den weiteren Komponenten 40 des Prozessleitsystems anstoßen, wenn beispielsweise ein Benutzer mittels des Client-Rechners 25 einen eine Komponente 45 der technischen Anlage betreffenden Steuerungsbefehl über das Internet 20 an den Prozessleitrechner 15 übermittelt, wo daraufhin Operationen 7 ausgeführt werden, welche mittels der Funkverbindung F weitere Operationen 8 in den weiteren Komponenten 40 zur Ausführung bringen.

In diesem Fall können die Operationen 7 beispielsweise der Ablauf einer Identifikationsroutine sein, welche den vom Benutzter eingegebenen Steuerungsbefehl identifiziert und nach erfolgter Identifikation einen Regelalgorithmus als weitere Operation 8 in einer weiteren Komponente, beispielsweise in einem Feldgerät, zum Ablauf bringt, mittels welchem eine Komponente 45, beispielsweise ein Aggregat der technischen Anlage ein Motor oder eine Pumpe, geregelt wird.

Der von der Recheneinheit 10 ermittelte Vergütungswert W kann beispielsweise eine Service- und/oder Lizenzgebühr sein, die vom Benutzer des Prozessleitsystems 5 an einen Dienstleister (Application-Service-Provider) zu bezahlen ist.

## Patentansprüche

1. Prozessleitsystem (5),
**gekennzeichnet durch** eine Recheneinheit (10), welche ertüchtigt ist, für im Prozessleitsystem ablaufende Operationen (7) bezüglich einer Erstellung und/oder Entfernung einer leittechnischen Funktion, einer Bedienhandlung und eines Ablaufs einer Automatisierungsfunktion einen Vergütungswert (W) zu ermitteln.

2. Prozessleitsystem (5) nach Anspruch 1,
wobei das Prozessleitsystem (5) einen Prozessleitrechner (15), einen Client-Rechner (25) und das Internet (20) umfasst und mindestens ein Teil der im Prozessleitsystem (5) ablaufenden Operationen (7) auf dem Prozessleitrechner (15) ablaufen.

3. Prozessleitsystem nach Anspruch 2,
wobei das Prozessleitsystem (5) mindestens ein Feldgerät zur Automatisierung mindestens einer Anlagenkomponente umfasst und mindestens ein Teil der im Prozessleitsystem (5) ablaufenden Operationen auf dem Feldgerät ablaufen.

4. Prozessleitsystem (5) nach Anspruch 2 oder 3,
wobei der Prozessleitrechner (15) einen Web-Server (30) und der Client-Rechner (25) einen Internet-Browser (35) umfassen, so dass mittels des Client-Rechners (25) über das Internet (20) die im Prozessleitrechner ablaufenden Operationen (7) beeinflussbar sind, wobei die Operationen (7) auch solche umfassen, durch welche weitere Operationen (8) in weiteren Komponenten (40) des Prozessleitsystems (5) angestoßen werden.

5. Prozessleitsystem (5) nach Anspruch 4,
wobei die weiteren Komponenten (40) Feldgeräte zur Überwachung und Steuerung von Komponenten (45) einer technischen Anlage umfassen, welche mittels Funk-Kommunikation (F) und/oder mittels einer Festverdrahtung mit dem Prozessleitrechner (15) verbunden sind und die weiteren Operationen (8) auch solche Operationen umfassen, welche in den Feldgeräten ausgeführt sind.

6. Prozessleitsystem (5) nach Anspruch 5, wobei die Kommunikation zwischen den Komponenten des Prozessleitsystems (5) auf dem TCP/IP-Übertragungsprotokoll (TCP/IP) basiert.

7. Prozessleitsystem (5) nach einem der Ansprüche 1 bis 6,
wobei der Vergütungswert (W) eine von einem Benutzer des Prozessleitsystems (5) an einen Application-Service-Provider zu entrichtende Service-Gebühr ist.

## Claims

1. Process control system (5),
**characterized by** a processor (10) which is able to ascertain a discount value (W) for operations (7) taking place in the process control system for creating and/or removing a control function, an operator control action and an automation function cycle.

2. Process control system (5) according to Claim 1,
where the process control system (5) comprises a process control computer (15), a client computer (25) and the Internet (20), and at least some of the operations (7) taking place in the process control system (5) take place on the process control computer (15).

3. Process control system according to Claim 2,
where the process control system (5) comprises at least one field device for automating at least one installation component, and at least some of the operations taking place in the process control system (5) take place on the field device.

4. Process control system (5) according to Claim 2 or 3,
where the process control computer (15) comprises a web server (30), and the client computer (25) comprises an Internet browser (35), so that the client computer (25) can be used via the Internet (20) to influence the operations (7) taking place in the process control computer, the operations (7) also including those which initiate further operations (8) in further components (40) of the process control system (5).

5. Process control system (5) according to Claim 4,
where the further components (40) comprise field devices for monitoring and controlling components (45) of a technical installation which are connected to the process control computer (15) by means of radio communication (F) and/or by means of hard-wiring, and the further operations (8) also include such operations as are executed in the field devices.

6. Process control system (5) according to Claim 5, where the communication between the components of the process control system (5) is based on the TCP/IP transmission protocol (TCP/IP).

7. Process control system (5) according to one of Claims 1 to 6, where the discount value (W) is a service charge which a user of the process control system (5) needs to pay to an application service provider.

## Revendications

1. Système de commande de processus (5),
**caractérisé par** un ordinateur (10) qui est capable de déterminer un prix (W) pour des opérations (7) exécutées dans le système de commande de processus et se rapportant à l'installation et/ou la suppression d'une fonction de la technique de commande, à une opération de commande et à une exécution d'une fonction d'automatisation.

2. Système de commande de processus (5) selon la revendication 1, dans lequel le système de commande de processus (5) comprend un ordinateur de commande de processus (15), un ordinateur client (25) et internet (20) et dans lequel au moins une partie des opérations (7) exécutées dans le système de commande de processus (5) sont exécutées sur l'ordinateur de commande de processus (15).

3. Système de commande de processus (5) selon la revendication 2, dans lequel le système de commande de processus (5) comprend au moins un appareil pour l'automatisation d'au moins un composant d'installation et dans lequel au moins une partie des opérations exécutées dans le système de commande de processus (5) sont exécutées sur l'appareil.

4. Système de commande de processus (5) selon la revendication 2 ou 3, dans lequel l'ordinateur de commande de processus (15) comprend un serveur web (30) et l'ordinateur client (25) comprend un navigateur internet (35) de telle sorte que les opérations (7) exécutées dans l'ordinateur de commande de processus peuvent être influencées au moyen de l'ordinateur client (25) via internet (20), les opérations (7) comprenant aussi des opérations par lesquelles sont déclenchées d'autres opérations (8) dans d'autres composants (40) du système de commande de processus (5).

5. Système de commande de processus (5) selon la revendication 4, dans lequel les autres composants (40) comprennent des appareils pour la surveillance et la commande de composants (45) d'une installation technique qui sont reliés au moyen d'une communication radio (F) et/ou au moyen d'un câblage fixe à l'ordinateur de commande de processus (15) et dans lequel les autres opérations (8) comprennent aussi des opérations qui sont exécutées dans les appareils.

6. Système de commande de processus (5) selon la revendication 5, dans lequel la communication entre les composants du système de commande de processus (5) est basée sur le protocole de transmission TCP/IP (TCP/IP).

7. Système de commande de processus (5) selon l'une des revendications 1 à 6, dans lequel le prix (W) est un prix de service à acquitter par un utilisateur du système de commande de processus (5) auprès d'un fournisseur de services (Application Service Provider).
